(19) Europäisches Patentamt
European Patent Office
Office européen des brevets

(11) EP 1 667 526 B1

(12) **EUROPÄISCHE PATENTSCHRIFT**

(45) Veröffentlichungstag und Bekanntmachung des Hinweises auf die Patenterteilung:
**14.02.2007 Patentblatt 2007/07**

(21) Anmeldenummer: **04765157.5**

(22) Anmeldetag: **14.09.2004**

(51) Int Cl.:
***A01N 47/04*** *(2006.01)*

(86) Internationale Anmeldenummer:
**PCT/EP2004/010241**

(87) Internationale Veröffentlichungsnummer:
**WO 2005/032257 (14.04.2005 Gazette 2005/15)**

(54) **FUNGIZIDE MISCHUNGEN**

FUNGICIDAL MIXTURES

MELANGES FONGICIDES

(84) Benannte Vertragsstaaten:
**AT BE BG CH CY CZ DE DK EE ES FI FR GB GR HU IE IT LI LU MC NL PL PT RO SE SI SK TR**
Benannte Erstreckungsstaaten:
**LT LV**

(30) Priorität: **22.09.2003 DE 10344147**
**05.05.2004 DE 10422684**

(43) Veröffentlichungstag der Anmeldung:
**14.06.2006 Patentblatt 2006/24**

(73) Patentinhaber: **BASF Aktiengesellschaft**
**67056 Ludwigshafen (DE)**

(72) Erfinder:
- **TORMO I BLASCO, Jordi**
  **69514 Laudenbach (DE)**
- **GROTE, Thomas**
  **67157 Wachenheim (DE)**
- **SCHERER, Maria**
  **76829 Godramstein (DE)**
- **STIERL, Reinhard**
  **67251 Freinsheim (DE)**
- **STRATHMANN, Siegfried**
  **67117 Limburgerhof (DE)**
- **SCHÖFL, Ulrich**
  **68782 Brühl (DE)**

(56) Entgegenhaltungen:
**EP-A- 0 988 790** **WO-A-98/46607**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 667 526 B1

## Beschreibung

Die vorliegende Erfindung betrifft fungizide Mischungen, enthaltend als aktive Komponenten

1) das Triazolopyrimidinderivat der Formel I,

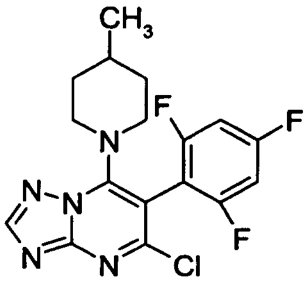

I

und

2) ein Phthalimidderivat II ausgewählt aus der Gruppe

a) Captan der Formel IIa,

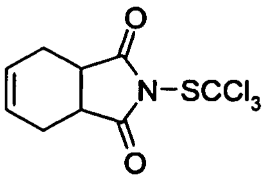

IIa

und

b) Folpet der Formel IIb,

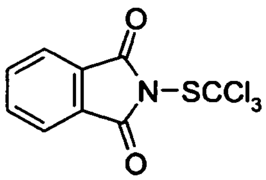

IIb

in einer synergistisch wirksamen Menge.

Außerdem betrifft die Erfindung ein Verfahren zur Bekämpfung von Reispathogenen mit Mischungen der Verbindung I mit den Verbindungen II und die Verwendung der Verbindung I mit den Verbindungen II zur Herstellung derartiger Mischungen sowie Mittel, die diese Mischungen enthalten.

Die Verbindung I, 5-Chlor-7-(4-methyl-piperidin-1-yl)-6-(2,4,6-trifluor-phenyl)-[1,2,4]triazolo(1,5-a]pyrimidin, ihre Herstellung und deren Wirkung gegen Schadpilze ist aus der Literatur bekannt (WO 98/46607).

Die Phthalimidderivate II, 2-Trichlormethylsulfanyl-3a,4,7,7a-tetrahydro-isoindol-1,3-dion (IIa; common name: Captan) und 2-Trichlormethylsulfanyl-isoindol-1,3-dion (IIb; common name: Folpet), ihre Herstellung und deren Wirkung gegen Schadpilze ist ebenfalls aus der Literatur bekannt (US 2 553 770; US 2 553 771; US 2 553 776). Die Phthalimidderivate II sind seit langem als Fungizide, hauptsächlich gegen *Oomyceten,* auf dem Markt etabliert.

Mischungen von Triazolopyrimidinderivaten mit Captan sind in EP-A 988 790 allgemein vorgeschlagen. Die Verbindung I ist von der allgemeinen Offenbarung dieser Schrift umfasst, ist jedoch nicht explizit erwähnt. Die Kombination der Verbindung I mit Captan ist daher neu. Folpet ist in EP-A 988 790 nicht erwähnt.

Die in EP-A 988 790 beschriebenen synergistischen Mischungen werden als fungizid wirksam gegen verschiedene Krankheiten von Getreide, Obst und Gemüse, insbesondere Mehltau an Weizen und Gerste oder Grauschimmel

an Äpfeln beschrieben.

Die fungizide Wirkung der bekannten Mischungen kann jedoch nicht immer völlig befriedigen.

Im Hinblick auf eine wirkungsvolle Bekämpfung von Reispathogenen bei möglichst geringen Aufwandmengen lagen der vorliegenden Erfindungen Mischungen als Aufgabe zugrunde, die bei verringerter Gesamtmenge an ausgebrachten Wirkstoffen eine verbesserte Wirkung gegen die Reispathogene zeigen.

Aufgrund der speziellen Kultivierungsbedingungen von Reispflanzen bestehen deutlich andere Anforderungen an ein Reisfungizid als an Fungizide, die im Getreide- oder Obstbau angewandt werden. Unterschiede bestehen in der Anwendungsmethode: Neben der vielerorts angewandten Blattapplikation wird im modernen Reisanbau das Fungizid üblicherweise direkt bei, oder kurz nach der Aussaat auf den Boden ausgebracht. Das Fungizid wird über die Wurzeln in die Pflanze aufgenommen und im Pflanzensaft in der Pflanze zu den zu schützenden Pflanzenteilen transportiert. Im Getreide- oder Obstbau hingegen wird das Fungizid üblicherweise auf die Blätter oder die Früchte appliziert, daher spielt in diesen Kulturen die Systemik der Wirkstoffe eine erheblich geringere Rolle.

Auch sind in Reis andere Pathogene typisch als in Getreide oder Obst. *Pyricularia oryzae* und *Corticium sasakii* (syn. *Rhizoctonia solani*) sind die Erreger der bedeutendsten Krankheiten von Reispflanzen. *Rhizoctonia solani* ist das einzige landwirtschaftlich bedeutende Pathogen innerhalb der Unterklasse *Agaricomycetidae.* Dieser Pilz befällt die Pflanze nicht wie die meisten anderen Pilze über Sporen, sondern über eine Myzelinfektion.

Aus diesen Gründen sind Erkenntnisse zur fungiziden Wirkung von Getreide- oder Obstbau nicht auf Reiskulturen übertragbar.

Praktische Erfahrungen in der Landwirtschaft haben gezeigt, dass der wiederholte und ausschließliche Einsatz eines Einzelwirkstoffs bei der Bekämpfung von Schadpilzen in vielen Fällen zur schnellen Selektion von solchen Pilzstämmen führt, die gegen den betreffenden Wirkstoff eine natürliche oder adaptierte Resistenz entwickelt haben. Eine wirksame Bekämpfung dieser Pilze mit dem betreffenden Wirkstoff ist dann nicht mehr möglich.

Um die Gefahr der Selektion von resistenten Pilzstämmen zu verringern, werden heutzutage zur Bekämpfung von Schadpilzen bevorzugt Mischungen verschiedener Wirkstoffe eingesetzt. Durch Kombination von Wirkstoffen mit unterschiedlichen Wirkungsmechanismen kann der Bekämpfungserfolg über längere Zeit gesichert werden.

Im Hinblick auf effektives Resitenzmanagement und eine wirkungsvolle Bekämpfung von Reispathogenen bei möglichst geringen Aufwandmengen lagen der vorliegenden Erfindungen Mischungen als Aufgabe zugrunde, die bei verringerter Gesamtmenge an ausgebrachten Wirkstoffen eine verbesserte Wirkung gegen die Schadpilze zeigen.

Demgemäss wurden die eingangs definierten Mischungen gefunden. Überraschenderweise wurde gefunden, dass die erfindungsgemäßen Mischungen des Triazolopyrimidinderivates I mit den Phthalimidderivaten II eine erheblich höhere Wirkung gegen Reispathogene aufweisen, als die in EP-A 988 790 vorgeschlagenen Mischungen der strukturell ähnlichen Triazolopyrimidine A, bzw. B, mit Captan.

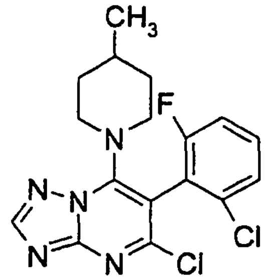

A

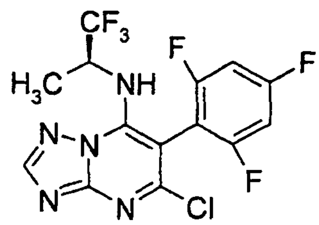

B

Es wurde außerdem gefunden, dass sich bei gleichzeitiger gemeinsamer oder getrennter Anwendung der Verbindung I und einer der Verbindungen II oder bei Anwendung der Verbindungen I und einer der Verbindungen II nacheinander reispathogene Schadpilze besser bekämpfen lassen als mit den Einzelverbindungen.

Bevorzugt setzt man bei der Bereitstellung der Mischungen die reinen Wirkstoffe I und IIa oder IIb ein, denen man je nach Bedarf weitere Wirkstoffe gegen Schadpilze oder andere Schädlinge wie Insekten, Spinntiere oder Nematoden, oder auch herbizide oder wachstumsregulierende Wirkstoffe oder Düngemittel beimischen kann.

Als weitere Wirkstoffe im voranstehenden Sinne kommen insbesondere Fungizide ausgewählt aus der folgenden Gruppe in Frage:

- Acylalanine wie Benalaxyl, Metalaxyl, Ofurace, Oxadixyl,
- Aminderivate wie Aldimorph, Dodemorph, Fenpropimorph, Fenpropidin, Guazatine, Iminoctadine, Spiroxamin, Tridemorph,
- Anilinopyrimidine wie Pyrimethanil, Mepanipyrim oder Cyprodinil,

- Antibiotika wie Cycloheximid, Griseofulvin, Kasugamycin, Natamycin, Polyoxin oder Streptomycin,
- Azole wie Bitertanol, Bromoconazol, Cyproconazol, Difenoconazole, Dinitroconazol, Enilconazol, Epoxiconazol, Fenbuconazol, Fluquiconazol, Flusilazol, Flutriafol, Hexaconazol, Imazalil, Ipconazol, Metconazol, Myclobutanil, Penconazol, Propiconazol, Prochloraz, Prothioconazol, Simeconazol, Tebuconazol, Tetraconazol, Triadimefon, Triadimenol, Triflumizol, Triticonazol,
- Dicarboximide wie Iprodion, Myclozolin, Procymidon, Vinclozolin,
- Dithiocarbamate wie Ferbam, Nabam, Maneb, Mancozeb, Metam, Metiram, Propineb, Polycarbamat, Thiram, Ziram, Zineb,
- Heterocylische Verbindungen wie Anilazin, Benomyl, Boscalid, Carbendazim, Carboxin, Oxycarboxin, Cyazofamid, Dazomet, Dithianon, Famoxadon, Fenamidon, Fenarimol, Fuberidazol, Flutolanil, Furametpyr, Isoprothiolan, Mepronil, Nuarimol, Picobenzamid, Probenazol, Proquinazid, Pyrifenox, Pyroquilon, Quinoxyfen, Silthiofam, Thiabendazol, Thifluzamid, Thiophanat-methyl, Tiadinil, Tricyclazol, Triforine,
- Kupferfungizide wie Bordeaux Brühe, Kupferacetat, Kupferoxychlorid, basisches Kupfersulfat,
- Nitrophenylderivate, wie Binapacryl, Dinocap, Dinobuton, Nitrophthal-isopropyl,
- Phenylpyrrole wie Fenpiclonil oder Fludioxonil,
- Schwefel,
- Sonstige Fungizide wie Acibenzolar-S-methyl, Benthiavalicarb, Carpropamid, Chlorothalonil, Cyflufenamid, Cymoxanil, Diclomezin, Diclocymet, Diethofencarb, Edifenphos, Ethaboxam, Fenhexamid, Fentin-Acetat, Fenoxanil, Ferimzone, Fluazinam, Fosetyl, Fosetyl-Aluminium, Iprovalicarb, Hexachlorbenzol, Metrafenon, Pencycuron, Propamocarb, Phthalid, Toloclofos-methyl, Quintozene, Zoxamid,
- Strobilurine wie Azoxystrobin, Dimoxystrobin, Fluoxastrobin, Kresoxim-methyl, Metominostrobin, Orysastrobin, Picoxystrobin, Pyraclostrobin oder Trifloxystrobin,
- Sulfensäurederivate wie Captafol, Dichlofluanid, Tolylfluanid,
- Zimtsäureamide und Analoge wie Dimethomorph, Flumetover oder Flumorph.

In einer Ausführungsform der erfindungsgemäßen Mischungen werden den Verbindungen I und II ein weiteres Fungizid III oder zwei Fungizide III und IV beigemischt.

Mischungen der Verbindungen I und II mit einer Komponente III sind bevorzugt. Besonders bevorzugt sind Mischungen der Verbindungen I und IIa oder IIb.

Die Mischungen der Verbindungen I und II bzw. die gleichzeitige gemeinsame oder getrennte Verwendung der Verbindungen I und der Verbindung II zeichnen sich aus durch eine hervorragende Wirksamkeit gegen Reispathogene aus der Klasse der *Ascomyceten, Deuteromyceten* und *Basidiomyceten.* Sie können zur Saatgutbehandlung, wie auch als Blatt- und Bodenfungizide eingesetzt werden.

Besondere Bedeutung haben sie für die Bekämpfung von Schadpilzen an Reispflanzen und an deren Saatgut, wie *Bipolaris-* und *Drechslera*-Arten, sowie *Pyricularia oryzae.* Insbesondere eignen sie sich zur Bekämpfung des Reisbrandes, der durch *Pyricularia oryzae* verursacht wird.

Darüber hinaus ist die erfindungsgemäße Kombination der Verbindungen I und II auch zur Bekämpfung anderer Pathogene geeignet, wie z. B. *Septoria-* und *Puccinia*-Arten in Getreide und *Alternaria-* und *Boytritis-Arten* in Gemüse, Obst und Wein.

Sie sind außerdem im Materialschutz (z.B. Holzschutz) anwendbar, beispielsweise gegen *Paecilomyces variotii.*

Die Verbindung I und die Verbindung IIa oder IIb können gleichzeitig gemeinsam oder getrennt oder nacheinander aufgebracht werden, wobei die Reihenfolge bei getrennter Applikation im allgemeinen keine Auswirkung auf den Bekämpfungserfolg hat.

Die Verbindung I und die Verbindungen IIa oder IIb werden üblicherweise in einem Gewichtsverhältnis von 100:1 bis 1:100, vorzugsweise 10:1 bis 1:50, insbesondere 5:1 bis 1:20 angewandt.

Die Aufwandmengen der erfindungsgemäßen Mischungen liegen je nach Art der Verbindung und des gewünschten Effekts bei 5 g/ha bis 2000 g/ha, vorzugsweise 50 bis 1500 g/ha, insbesondere 50 bis 1000 g/ha.

Die Aufwandmengen für die Verbindung I liegen entsprechend in der Regel bei 1 bis 1500 g/ha, vorzugsweise 10 bis 1200 g/ha, insbesondere 20 bis 900 kg/ha.

Die Aufwandmengen für die Verbindungen IIa bzw. IIb liegen entsprechend in der Regel bei 1 bis 2000 g/ha, vorzugsweise 10 bis 1500 g/ha, insbesondere 20 bis 1000 g/ha.

Bei der Saatgutbehandlung werden im allgemeinen Aufwandmengen an Mischung von 1 bis 1000 g/100 kg Saatgut, vorzugsweise 1 bis 200 g/100 kg, insbesondere 5 bis 100 g/100 kg verwendet.

Bei der Bekämpfung für Reispflanzen pathogener Schadpilze erfolgt die getrennte oder gemeinsame Applikation der Verbindungen I und der Verbindungen IIa oder IIb oder der Mischungen aus der Verbindung I und der Verbindungen IIa oder IIb durch Besprühen oder Bestäuben der Samen, der Sämlinge, der Pflanzen oder der Böden vor oder nach der Aussaat der Pflanzen oder vor oder nach dem Auflaufen der Pflanzen. Bevorzugt erfolgt die Applikation der

Verbindungen gemeinsam oder getrennt durch Besprühen der Blätter. Die Applikation der Verbindungen kann auch durch Granulatapplikation oder Bestäuben der Böden erfolgen.

Die erfindungsgemäßen Mischungen, bzw. die Verbindungen I und II können in die üblichen Formulierungen überführt werden, z.B. Lösungen, Emulsionen, Suspensionen, Stäube, Pulver, Pasten und Granulate. Die Anwendungsform richtet sich nach dem jeweiligen Verwendungszweck; sie soll in jedem Fall eine feine und gleichmäßige Verteilung der erfindungsgemäßen Verbindung gewährleisten.

Die Formulierungen werden in bekannter Weise hergestellt, z.B. durch Verstrecken des Wirkstoffs mit Lösungsmitteln und/oder Trägerstoffen, gewünschtenfalls unter Verwendung von Emulgiermitteln und Dispergiermitteln. Als Lösungsmittel / Hilfsstoffe kommen dafür im wesentlichen in Betracht:

- Wasser, aromatische Lösungsmittel (z.B. Solvesso Produkte, Xylol), Paraffine (z.B. Erdölfraktionen), Alkohole (z.B. Methanol, Butanol, Pentanol, Benzylalkohol), Ketone (z.B. Cyclohexanon, gamma-Butryolacton), Pyrrolidone (NMP, NOP), Acetate (Glykoldiacetat), Glykole, Dimethylfettsäureamide, Fettsäuren und Fettsäureester. Grundsätzlich können auch Lösungsmittelgemische verwendet werden,
- Trägerstoffe wie natürliche Gesteinsmehle (z.B. Kaoline, Tonerden, Talkum, Kreide) und synthetische Gesteinsmehle (z.B. hochdisperse Kieselsäure, Silikate); Emulgiermittel wie nichtionogene und anionische Emulgatoren (z.B. Polyoxyethylen-Fettalkohol-Ether, Alkylsulfonate und Arylsulfonate) und Dispergiermittel wie LigninSulfitablaugen und Methylcellulose.

Als oberflächenaktive Stoffe kommen Alkali-, Erdalkali-, Ammoniumsalze von Ligninsulfonsäure, Naphthalinsulfonsäure, Phenolsulfonsäure, Dibutylnaphthalinsulfonsäure, Alkylarylsulfonate, Alkylsulfate, Alkylsulfonate, Fettalkoholsulfate, Fettsäuren und sulfatierte Fettalkoholglykolether zum Einsatz, ferner Kondensationsprodukte von sulfoniertem Naphthalin und Naphthalinderivaten mit Formaldehyd, Kondensationsprodukte des Naphthalins bzw. der Naphtalinsulfonsäure mit Phenol und Formaldehyd, Polyoxyethylenoctylphenolether, ethoxyliertes Isooctylphenol, Octylphenol, Nonylphenol, Alkylphenolpolyglykolether, Tributylphenylpolyglykolether, Tristerylphenylpolyglykolether, Alkylarylpolyetheralkohole, Alkohol- und Fettalkoholethylenoxid-Kondensate, ethoxyliertes Rizinusöl, Polyoxyethylenalkylether, ethoxyliertes Polyoxypropylen, Laurylalkoholpolyglykoletheracetal, Sorbitester, Ligninsulfitablaugen und Methylcellulose in Betracht.

Zur Herstellung von direkt versprühbaren Lösungen, Emulsionen, Pasten oder Öldispersionen kommen Mineralölfraktionen von mittlerem bis hohem Siedepunkt, wie Kerosin oder Dieselöl, ferner Kohlenteeröle sowie Öle pflanzlichen oder tierischen Ursprungs, aliphatische, cyclische und aromatische Kohlenwasserstoffe, z.B. Toluol, Xylol, Paraffin, Tetrahydronaphthalin, alkylierte Naphthaline oder deren Derivate, Methanol, Ethanol, Propanol, Butanol, Cyclohexanol, Cyclohexanon, Isophoron, stark polare Lösungsmittel, z.B. Dimethytsuifoxid, N-Methylpyrrolidon oder Wasser in Betracht.

Pulver-, Streu- und Stäubmittel können durch Mischen oder gemeinsames Vermahlen der wirksamen Substanzen mit einem festen Trägerstoff hergestellt werden.

Granulate, z.B. Umhüllungs-, Imprägnierungs- und Homogengranulate, können durch Bindung der Wirkstoffe an feste Trägerstoffe hergestellt werden. Feste Trägerstoffe sind z.B. Mineralerden, wie Kieselgele, Silikate, Talkum, Kaolin, Attaclay, Kalkstein, Kalk, Kreide, Bolus, Löß, Ton, Dolomit, Diatomeenerde, Calcium- und Magnesiumsulfat, Magnesiumoxid, gemahlene Kunststoffe, Düngemittel, wie z.B. Ammoniumsulfat, Ammoniumphosphat, Ammoniumnitrat, Harnstoffe und pflanzliche Produkte, wie Getreidemehl, Baumrinden-, Holz- und Nussschalenmehl, Cellulosepulver und andere feste Trägerstoffe.

Die Formulierungen enthalten im allgemeinen zwischen 0,01 und 95 Gew.-%, vorzugsweise zwischen 0,1 und 90 Gew.-% der Wirkstoffe. Die Wirkstoffe werden dabei in einer Reinheit von 90% bis 100%, vorzugsweise 95% bis 100% (nach NMR-Spektrum) eingesetzt.

Beispiele für Formulierungen sind: 1. Produkte zur Verdünnung in Wasser

A) Wasserlösliche Konzentrate (SL)

10 Gew.-Teile der Wirkstoffe werden in Wasser oder einem wasserlöslichen Lösungsmittel gelöst. Alternativ werden Netzmittel oder andere Hilfsmittel zugefügt. Bei der Verdünnung in Wasser löst sich der Wirkstoff.

B) Dispergierbare Konzentrate (DC)

20 Gew.-Teile der Wirkstoffe werden in Cyclohexanon unter Zusatz eines Dispergiermittels z.B. Polyvinylpyrrolidon gelöst. Bei Verdünnung in Wasser ergibt sich eine Dispersion.

C) Emulgierbare Konzentrate (EC)

15 Gew.-Teile der Wirkstoffe werden in Xylol unter Zusatz von Ca-Dodecylbenzolsulfonat und Ricinusölethoxylat (jeweils 5 %) gelöst. Bei der Verdünnung in Wasser ergibt sich eine Emulsion.

D) Emulsionen (EW, EO)

40 Gew.-Teile der Wirkstoffe werden in Xylol unter Zusatz von Ca-Dodecylbenzolsulfonat und Ricinusölethoxylat (jeweils 5 %) gelöst. Diese Mischung wird mittels einer Emulgiermaschine (Ultraturax) in Wasser eingebracht und zu einer homogenen Emulsion gebracht. Bei der Verdünnung in Wasser ergibt sich eine Emulsion.

E) Suspensionen (SC, OD)

20 Gew.-Teile der Wirkstoffe werden unter Zusatz von Dispergier- und Netzmitteln und Wasser oder einem organischen Lösungsmittel in einer Rührwerkskugelmühle zu einer feinen Wirkstoffsuspension zerkleinert. Bei der Verdünnung in Wasser ergibt sich eine stabile Suspension des Wirkstoffs.

F) Wasserdispergierbare und wasserlösliche Granulate (WG, SG)

50 Gew.-Teile der Wirkstoffe werden unter Zusatz von Dispergier- und Netzmitteln fein gemahlen und mittels technischer Geräte (z.B. Extrusion, Sprühturm, Wirbelschicht) als wasserdispergierbare oder wasserlösliche Granulate hergestellt. Bei der Verdünnung in Wasser ergibt sich eine stabile Dispersion oder Lösung des Wirkstoffs.

G) Wasserdispergierbare und wasserlösliche Pulver (WP, SP)

75 Gew.-Teile der Wirkstoffe werden unter Zusatz von Dispergier- und Netzmitteln sowie Kieselsäuregel in einer Rotor-Strator Mühle vermahlen. Bei der Verdünnung in Wasser ergibt sich eine stabile Dispersion oder Lösung des Wirkstoffs.

2. Produkte für die Direktapplikation

H) Stäube (DP)

5 Gew.Teile der Wirkstoffe werden fein gemahlen und mit 95 % feinteiligem Kaolin innig vermischt. Man erhält dadurch ein Stäubmittel.

I) Granulate (GR, FG, GG, MG)

0.5 Gew-Teile der Wirkstoffe werden fein gemahlen und mit 95.5 % Trägerstoffe verbunden. Gängige Verfahren sind dabei die Extrusion, die Sprühtrocknung oder die Wirbelschicht. Man erhält dadurch ein Granulat für die Direktapplikation.

J) ULV- Lösungen (UL)

10 Gew.-Teile der Wirkstoffe werden in einem organischen Lösungsmittel z.B. Xylol gelöst. Dadurch erhält man ein Produkt für die Direktapplikation.

Die Wirkstoffe können als solche, in Form ihrer Formulierungen oder den daraus bereiteten Anwendungsformen, z.B. in Form von direkt versprühbaren Lösungen, Pulvern, Suspensionen oder Dispersionen, Emulsionen, Öldispersionen, Pasten, Stäubmitteln, Streumitteln, Granulaten durch Versprühen, Vernebeln, Verstäuben, Verstreuen oder Gießen angewendet werden. Die Anwendungsformen richten sich ganz nach den Verwendungszwecken; sie sollten in jedem Fall möglichst die feinste Verteilung der erfindungsgemäßen Wirkstoffe gewährleisten.

Wässrige Anwendungsformen können aus Emulsionskonzentraten, Pasten oder netzbaren Pulvern (Spritzpulver, Öldispersionen) durch Zusatz von Wasser bereitet werden. Zur Herstellung von Emulsionen, Pasten oder Öldispersionen können die Substanzen als solche oder in einem Öl oder Lösungsmittel gelöst, mittels Netz-, Haft-, Dispergier- oder Emulgiermitttel in Wasser homogenisiert werden. Es können aber auch aus wirksamer Substanz Netz-, Haft-, Dispergier- oder Emulgiermittel und eventuell Lösungsmittel oder Öl bestehende Konzentrate hergestellt werden, die zur Verdünnung mit Wasser geeignet sind.

Die Wirkstoffkonzentrationen in den anwendungsfertigen Zubereitungen können in größeren Bereichen variiert

werden. Im allgemeinen liegen sie zwischen 0,0001 und 10%, vorzugsweise zwischen 0,01 und 1%.

Die Wirkstoffe können auch mit gutem Erfolg im Ultra-Low-Volume-Verfahren (ULV) verwendet werden, wobei es möglich ist, Formulierungen mit mehr als 95 Gew.-% Wirkstoff oder sogar den Wirkstoff ohne Zusätze auszubringen.

Zu den Wirkstoffen können Öle verschiedenen Typs, Netzmittel, Adjuvants, Herbizide, Fungizide, andere Schädlingsbekämpfungsmittel, Bakterizide, gegebenenfalls auch erst unmittelbar vor der Anwendung (Tankmix), zugesetzt werden. Diese Mittel werden üblicherweise zu den erfindungsgemäßen Mitteln im Gewichtsverhältnis 1:10 bis 10: 1 zugemischt.

Die Verbindungen I und II, bzw. die Mischungen oder die entsprechenden Formulierungen werden angewendet, indem man die Schadpilze, die von ihnen freizuhaltenden Pflanzen, Samen, Böden, Flächen, Materialien oder Räume mit einer fungizid wirksamen Menge der Mischung, bzw. der Verbindungen I und II bei getrennter Ausbringung, behandelt. Die Anwendung kann vor oder nach dem Befall durch die Schadpilze erfolgen.

Die fungizide Wirkung der Verbindung und der Mischungen lässt sich durch folgende Versuche zeigen:

Die Wirkstoffe wurden getrennt oder gemeinsam als eine Stammlösung aufbereitet mit 0,25 Gew.-% Wirkstoff in Aceton oder DMSO. Dieser Lösung wurde 1 Gew.-% Emulgator Uniperol® EL (Netzmittel mit Emulgier- und Dispergierwirkung auf der Basis ethoxylierter Alkylphenole) zugesetzt und entsprechend der gewünschten Konzentration mit Wasser verdünnt.

Anwendungsbeispiel - Protektive Wirksamkeit gegen Reisbrand verursacht durch *Pyricularia oryzae*

Blätter von in Töpfen gewachsenen Reiskeimlingen der Sorte "Tai-Nong 67" wurden mit wässriger Suspension in der unten angegebenen Wirkstoffkonzentration bis zur Tropfnässe besprüht.. Am folgenden Tag wurden die Pflanzen mit einer wässrigen Sporensuspension von *Pyricularia oryzae* inokuliert. Anschließend wurden die Versuchspflanzen in Klimakammem bei 22 - 24°C und 95 - 99 % relativer Luftfeuchtigkeit für 6 Tage aufgestellt. Dann wurde das Ausmaß der Befallsentwicklung auf den Blättern visuell ermittelt.

Die visuell ermittelten Werte für den Prozentanteil befallener Blattflächen wurden in Wirkungsgrade als % der unbehandelten Kontrolle umgerechnet:

Der Wirkungsgrad (W) wird nach der Formel von Abbot wie folgt berechnet:

$$W = (1 - \alpha/\beta) \cdot 100$$

- α entspricht dem Pilzbefall der behandelten Pflanzen in % und
- β entspricht dem Pilzbefall der unbehandelten (Kontroll-) Pflanzen in %

Bei einem Wirkungsgrad von 0 entspricht der Befall der behandelten Pflanzen demjenigen der unbehandelten Kontrollpflanzen; bei einem Wirkungsgrad von 100 weisen die behandelten Pflanzen keinen Befall auf.

Die zu erwartenden Wirkungsgrade für Wirkstoffkombinationen wurden nach der Colby-Formel (Colby, S. R. (Calculating synergistic and antagonistic responses of herbicide Combinations", Weeds, 15, S. 20 - 22, 1967) ermittelt und mit den beobachteten Wirkungsgraden verglichen.

Colby Formel:

$$E = x + y - x \cdot y/100$$

- E zu erwartender Wirkungsgrad, ausgedrückt in % der unbehandelten Kontrolle, beim Einsatz der Mischung aus den Wirkstoffen A und B in den Konzentrationen a und b
- x der Wirkungsgrad, ausgedrückt in % der unbehandelten Kontrolle, beim Einsatz des Wirkstoffs A in der Konzentration a
- y der Wirkungsgrad, ausgedrückt in % der unbehandelten Kontrolle, beim Einsatz des Wirkstoffs B in der Konzentration b

Als Vergleichsverbindungen wurden die von den in EP-A 988 790 beschriebenen Captan-Mischungen bekannten Verbindungen A und B verwendet:

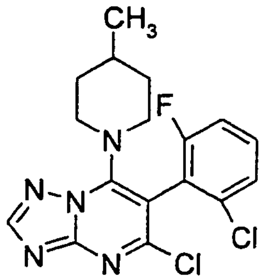

A

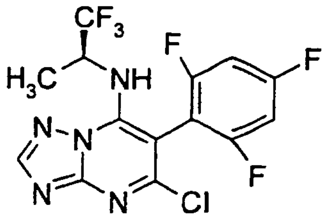

B

Tabelle A - Einzelwirkstoffe

| Beispiel | Wirkstoff | Wirkstoffkonzentration in der Spritzbrühe [ppm] | Wirkungsgrad in % der unbehandelten Kontrolle |
|---|---|---|---|
| 1 | - | Kontrolle (unbehandelt) | (76 % Befall) |
| 2 | I | 63<br>16 | 48<br>21 |
| 3 | IIa (Captan) | 63<br>16 | 35<br>0 |
| 4 | IIb (Folpet) | 63<br>16 | 8<br>0 |
| 5 | Vergleich A | 63<br>16 | 61<br>35 |
| 6 | Vergleich B | 63<br>16 | 61<br>48 |

Tabelle B - erfindungsgemäße Mischungen

| Beispiel | Wirkstoffmischung Konzentration Mischungsverhältnis | beobachteter Wirkung sgrad | berechneter Wirkungsgrad*) |
|---|---|---|---|
| 7 | I+IIa<br>63+16 ppm<br>4:1 | 91 | 48 |
| 8 | I+IIa<br>16+63 ppm<br>1:4 | 87 | 49 |
| 9 | I+IIb<br>63+16 ppm<br>4:1 | 80 | 48 |
| 10 | I+IIb<br>16+63 ppm<br>1:4 | 74 | 28 |
| *) berechneter Wirkungsgrad nach der Colby-Formel | | | |

Tabelle C - Vergleichsversuche - Kombinationen der aus EP-A 988 790 bekannten Wirkstoffe

| Beispiel | Wirkstoffmischung Konzentration Mischungsverhältnis | beobachteter Wirkungsgrad | berechneter Wirkungsgrad*) |
|---|---|---|---|
| 11 | A + IIa<br>63+16 ppm<br>4:1 | 61 | 61 |
| 12 | A+IIa<br>16+63 ppm<br>1:4 | 35 | 57 |
| 13 | A+IIb<br>63+16 ppm<br>4:1 | 48 | 61 |
| 14 | A + IIb<br>16+63 ppm<br>1:4 | 35 | 40 |
| 15 | B + IIa<br>63+16 ppm<br>4:1 | 48 | 61 |
| 16 | B + IIa<br>16+63 ppm<br>1:4 | 35 | 66 |
| 17 | B + IIb<br>63+16 ppm<br>4:1 | 48 | 61 |
| 18 | B+IIb<br>16+63 ppm<br>1:4 | 48 | 52 |
| *) berechneter Wirkungsgrad nach der Colby-Formel | | | |

Aus den Ergebnissen der Versuche geht hervor, dass die erfindungsgemäßen Mischungen bei vergleichbaren Aufwandmengen eine deutlich höhere Wirksamkeit zeigen, als die aus EP-A 988 790 bekannten Captan-Mischungen, obwohl die Vergleichsverbindungen als Einzelwirkstoffe gegenüber der Verbindung I relativ besser wirksam sind.

## Patentansprüche

**1.** Fungizide Mischungen, enthaltend

1) das Triazolopyrimidinderivat der Formel I,

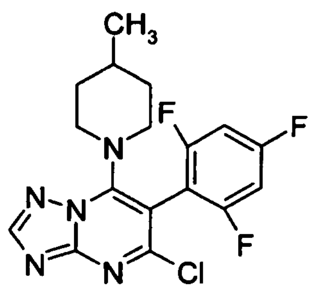

I

und
2) ein Phthalimidderivat II ausgewählt aus der Gruppe

a) Captan der Formel IIa,

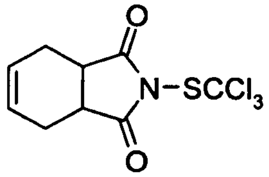

IIa

und
b) Folpet der Formel IIb,

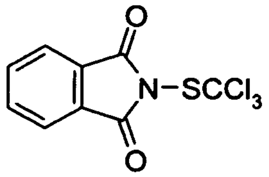

IIb

in einer synergistisch wirksamen Menge.

**2.** Fungizide Mischungen gemäß Anspruch 1, enthaltend die Verbindung der Formel I und die Verbindungen der Formel II in einem Gewichtsverhältnis von 100:1 bis 1:100.

**3.** Fungizide Mischungen gemäß einem der Ansprüche 1 oder 2, enthaltend als Phthalimidderivat Captan der Formel IIa gemäß Anspruch 1.

**4.** Fungizide Mischungen gemäß einem der Ansprüche 1 oder 2, enthaltend als Phthalimidderivat Folpet der Formel IIb gemäß Anspruch 1.

**5.** Fungizides Mittel, enthaltend einen flüssigen oder festen Trägerstoff und eine Mischung gemäß einem der Ansprüche 1 bis 4.

**6.** Verfahren zur Bekämpfung von reispathogenen Schadpilzen, **dadurch gekennzeichnet, dass** man die Pilze, deren Lebensraum oder die vor Pilzbefall zu schützenden Pflanzen, den Boden oder Saatgüter mit einer wirksamen Menge der Verbindung I und einer der Verbindungen II gemäß Anspruch 1 behandelt.

**7.** Verfahren nach Anspruch 6, **dadurch gekennzeichnet, dass** man die Verbindungen I und II gemäß Anspruch 1 gleichzeitig, und zwar gemeinsam oder getrennt, oder nacheinander ausbringt.

**8.** Verfahren nach Anspruch 6, **dadurch gekennzeichnet, dass** man die Mischung gemäß Ansprüchen 1 bis 4 in einer Menge von 5 g/ha bis 2000 g/ha aufwendet.

**9.** Verfahren nach Ansprüchen 6 und 7, **dadurch gekennzeichnet, dass** man die Mischung gemäß Ansprüchen 1 bis 4 in einer Menge von 1 bis 1000 g/100 kg Saatgut anwendet.

**10.** Verfahren nach Ansprüchen 5 bis 8, **dadurch gekennzeichnet, dass** der Schadpilz *Pyricularia oryzae* bekämpft wird.

**11.** Saatgut, enthaltend die Mischung gemäß einem der Ansprüche 1 bis 4 in einer Menge von 1 bis 1000 g/100 kg.

**12.** Verwendung der Verbindung I und der Verbindung II gemäß Anspruch 1 zur Herstellung eines Mittels gemäß Anspruch 5.

**Claims**

1. A fungicidal mixture comprising

1) the triazolopyrimidine derivative of the formula I

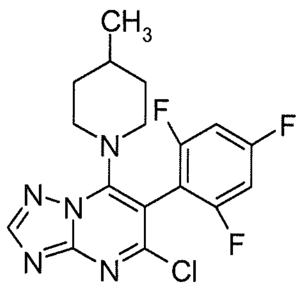

I

and

2) a phthalimide derivative II selected from the group consisting of

a) captan of the formula IIa,

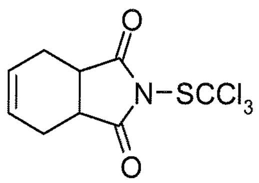

IIa

and

b) folpet of the formula IIb,

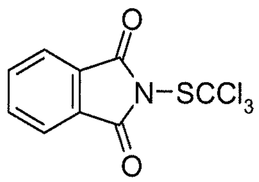

IIb

in a synergistically effective amount.

2. The fungicidal mixture according to claim 1 comprising the compound of the formula I and the compound of the formula II in a weight ratio of from 100:1 to 1:100.

3. The fungicidal mixture according to claim 1 or 2 comprising, as phthalimide derivative, captan of the formula IIa as set forth in claim 1.

4. The fungicidal mixture according to claim 1 or 2 comprising, as phthalimide derivative, folpet of the formula IIb as set forth in claim 1.

5. The fungicidal composition comprising a liquid or solid carrier and a mixture according to any of claims 1 to 4.

6. A method for controlling rice-pathogenic harmful fungi, which comprises treating the fungi, their habitat or the seed, the soil or the plants to be protected against fungal attack with an effective amount of the compound I and one of the compounds II as set forth in claim 1.

7. The method according to claim 6, wherein the compounds I and II as set forth in claim 1 are applied simultaneously, that is jointly or separately, or in succession.

8. The method according to claim 6, wherein the mixture according to any of claims 1 to 4 is applied in an amount of from 5 g/ha to 2000 g/ha.

9. The method according to claim 6 or 7, wherein the mixture according to any of claims 1 to 4 is applied in an amount of from 1 to 1000 g/100 kg of seed.

10. The method according to any of claims 5 to 8, wherein the harmful fungus *Pyricularia oryzae* is controlled.

11. Seed comprising the mixture according to one of claims 1 to 4 in an amount of from 1 to 1000 g/100 kg.

12. The use of the compound I and the compound II as set forth in claim 1 for preparing a composition according to claim 5.

**Revendications**

1. Mélanges fongicides contenant

1) le dérivé de triazolopyrimidine de la formule I

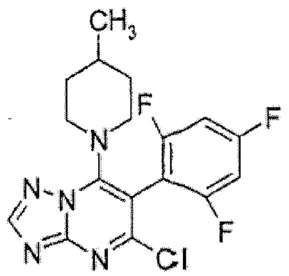

I

et

2) un dérivé de phtalimide II choisi parmi le groupe

a) du captan de la formule IIa :

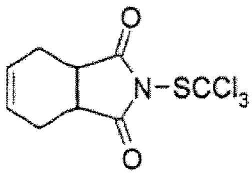

IIa

et

b) du folpet de la formule IIb :

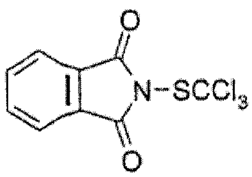

IIb

en une quantité efficace du point de vue synergique.

**2.** Mélanges fongicides suivant la revendication 1, contenant le composé de la formule I et les composés de la formule II dans un rapport pondéral de 100/1 à 1/100.

**3.** Mélanges fongicides suivant l'une des revendications 1 ou 2, contenant, comme dérivé de phtalimide, du captan de la formule IIa suivant la revendication 1.

**4.** Mélanges fongicides suivant l'une des revendications 1 ou 2, contenant, comme dérivé de phtalimide, du folpet de la formule IIb suivant la revendication 1.

**5.** Produit fongicide contenant un support liquide ou solide et un mélange suivant l'une des revendications 1 à 4.

**6.** Procédé pour lutter contre des champignons nuisibles pathogènes pour le riz, **caractérisé en ce qu'**on traite les champignons, leur environnement ou les plantes, sols ou semences à protéger d'une infestation par ces champignons avec une quantité efficace du composé I et une quantité efficace des composés II suivant la revendication 1.

**7.** Procédé suivant la revendication 6, **caractérisé en ce qu'**on épand les composés I et II suivant la revendication 1 simultanément, et cela conjointement ou séparément, ou successivement.

**8.** Procédé suivant la revendication 6, **caractérisé en ce qu'**on applique le mélange suivant les revendications 1 à 4 en une quantité de 5 g/ha à 2000 g/ha.

**9.** Procédé suivant les revendications 6 et 7, **caractérisé en ce qu'**on applique le mélange suivant les revendications 1 à 4 en une quantité de 1 à 1000 g/100 kg de semences.

**10.** Procédé suivant les revendications 5 à 8, **caractérisé en ce qu'**on lutte contre le champignon nuisible *Pyricularia oryzae.*

**11.** Semences, contenant le mélange suivant l'une des revendications 1 à 4, en une quantité de 1 à 1000 g/100 kg.

**12.** Utilisation du composé I et du composé II suivant la revendication 1, pour la préparation d'un produit suivant la revendication 5.